# EUROPÄISCHE PATENTSCHRIFT

(11) **EP 1 044 761 B1**
(45) Veröffentlichungstag und Bekanntmachung des Hinweises auf die Patenterteilung: **20.08.2003**
(21) Anmeldenummer: 00107853.4
(22) Anmeldetag: 12.04.2000
(51) Int. Cl.: B23Q 9/00, B25H 1/00, B23C 1/06, A61C 3/02, B65H 1/00, A61C 13/00

(54) **Fräsvorrichtung, insbesondere für Anwendungen im Dental-Bereich**
Milling device, in particular for use in dentistry
Dispositif de fraisage, en particulier pour les applications dans le domaine dentaire

(30) Priorität: 12.04.1999 DE 19916449
(43) Veröffentlichungstag der Anmeldung: 18.10.2000
(73) Patentinhaber: Georg Schick Dental GmbH, 88433 Schemmerhofen (DE)
(72) Erfinder: Birk, Hubert, 88487 Mietingen (DE); Hochdorfer, Joachim, 88480 Bronnen (DE); Schick, Wolfgang, 88433 Schemmerhofen (DE)
(74) Vertreter: Dziewior, Joachim, Dipl.-Phys. Dr.

(56) Entgegenhaltungen:
- DE-A- 3 328 917
- DE-A- 3 604 531
- US-A- 4 411 626

## Beschreibung

Die Erfindung betrifft eine Fräsvorrichtung, insbesondere für Anwendungen im Dental-Bereich, bestehend aus einem Vorrichtungsfuß mit einer Werkzeugsäule, ferner aus einem Fräskopf, der über einen Auslegerarm an der Werkzeugsäule angeschlossen ist, sowie einem als Auflage für das Werkstück dienenden Frästeller, wobei der Fräskopf in fester Höhe an der Werkzeugsäule angeschlossen und der Frästeller höhenverstellbar an der Werkzeugsäule angeordnet ist.

Derartige Fräsvorrichtungen sind in vielfältigen Ausführungen in der Praxis bekannt und dienen dazu, zahntechnische Modelle mittels Fräser, Bohrer oder dergleichen rotierender Werkzeuge zu bearbeiten.

So beschreibt etwa die US-A-4 411 626 ein Verfahren sowie eine Vorrichtung zur Herstellung eines Kronenteiles, wobei eine nummerisch gesteuerte Bearbeitungsmachine mit einer Aufspannvorrichtung für das zu bearbeitende Modell einer Zahngruppe oder eines Zahnstumpfes zur Anwendung kommt. Weiter ist ein Tastkopf sowie eine Führungseinrichtung zum Entlangführen des Tastkopfes an dem Zahnstumpf vorgesehen, wobei beim Entlangführen des Tastkopfes an dem Zahnstumpf Positionsdaten erfasst und in einen Speicher abgelegt werden. Anhand dieser Daten wird dann ein Konturwerkzeug unter Steuerung eines Rechners relativ zu dem Zahnstumpf bewegt.

Es handelt sich hierbei also um ein Verfahren beziehungsweise eine Vorrichtung mit weitestgehend automatisiertem, das heißt numerisch gesteuertem Ablauf. Die manuell vorzunehmenden Handlungen beschränken sich demnach darauf, das Modell auf der Aufspannvorrichtung anzubringen.

Für manuell durchzuführende Arbeiten beschreibt die DE-A-33 28 917 eine an einem Arbeitstisch anzubringende Armauflage, wobei jeweils eine Armauflage seitlich neben einem ebenfalls am Tisch anzubringenden Arbeitsblock vorgesehen ist. Der zur Befestigung während der Bearbeitung eines Modells dienende Arbeitsblock einerseits und die die Arbeit am Modell erleichternden Armauflagen andererseits stehen damit in keiner festen Beziehung zueinander, sind also abhängig von dem jeweils gewählten Befestigungsort am Tisch. Im übrigen ist diese Anordnung offensichtlich ausschließlich für manuelle Arbeiten an dem Modell vorgesehen. Zum Einsatz kommen daher wohl nur handgeführte Werkzeuge, zu denen jedenfalls feststehende Fräsvorrichtungen nicht zu rechnen sind.

Schließlich beschreibt die DE-A-36 04 531 ebenfalls ein Verfahren sowie eine Vorrichtung zur Herstellung von Zahnersatzteilen, bei der eine 3-Achsen-Fräsmaschine zur Bearbeitung eines auf einem Koordinatentisch angeordneten Gipsmodelles dient. Auch hier erfolgt zunächst eine Erfassung der Raumkoordinaten des Modells mittels einer Abtastvorrichtung, über die anschließend die Durchführung eines vollautomatischen Fräsvorgangs programmierbar ist.

Der Erfindung liegt die Aufgabe zugrunde, eine Fräsvorrichtung der eingangs genannten Art so auszubilden, daß die Bedienung und Handhabung, auch bei dem jeweiligen Wechsel des Modells, vereinfacht wird und Anpassungen sowie Einstellungen schnell und ohne weiteres vorgenommen und beibehalten werden können.

Diese Aufgabe wird nach der Erfindung dadurch gelöst, daß am Vorrichtungsfuß eine Haltesäule vorgesehen ist, die achsparallel zur Werkzeugsäule verläuft und wenigstens einen Auslegerarm mit einer Arm-/ Handauflage trägt.

Der durch die Erfindung erreichte Vorteil besteht im wesentlichen darin, daß durch den bezüglich seiner Höhe feststehenden Fräskopf, womit auch das Fräswerkzeug und damit der Bearbeitungsort auf gleicher Höhe bleibt, sowie den demgegenüber feststellbaren Arm-/ Handauflagen eine unveränderte Arbeitshaltung gewährleistet ist. Eine Anpassung an unterschiedlich hohe Modelle bzw. Unterbauten für das Modell beeinflußt diese Einstellungen nicht.

Zweckmäßigerweise ist dabei jede Arm-/Handauflage über ein Gelenk mit senkrechter Gelenkachse an dem Auslegerarm gelagert, wodurch sich der Abstand der Arm-/ Handauflage vom Frästisch leicht - den Bedürfnissen entsprechend - einstellen läßt.

Hierbei ist es von Vorteil, wenn das Gelenk mit mehreren Raststellungen versehen ist, da dann eine Verstellung möglich ist, ohne daß Feststellmittel zunächst gelöst und anschließend wieder fixiert werden müssen.

Um noch weitere Anpassungsmöglichkeiten zu haben, sieht die Erfindung vor, daß jede Arm-/Handauflage auf einer horizontalen Gelenkwelle angeordnet ist, deren eines Ende an dem Gelenk angeschlossen ist. Dadurch ist auch die Neigung der Arm-/ Handauflage zum Frästeller hin individuell anpaßbar. Hierzu ist es dann erforderlich, daß die Arm-/ Handauflage mittels einer Feststellschraube drehfest auf der Gelenkwelle arretierbar ist.

Schließlich - um eine volle dreidimensionale Anpaßbarkeit zu ermöglichen - kann der Auslegerarm bzw. können die Auslegerarme höhenverstellbar und/oder drehbar auf der Haltesäule angeordnet und durch eine Arretierschraube feststellbar sein.

Die Haltesäule erstreckt sich dabei vorteilhafterweise durch eine Bohrung im Frästeller.

Eine weitere vorteilhafte Ausgestaltung der Erfindung ist dadurch gekennzeichnet, daß ein Bedienelement zur Steuerung der wichtigsten Funktionen während des Fräsvorganges vorgesehen ist, wobei das Bedienelement in seiner Position frei verstellbar ist. Dies hat den Vorteil, daß während des Fräsvorganges die Bedienfunktionen ausgeführt werden können, ohne daß die gewählte Blickrichtung geändert werden muß, was beim handgeführten Fräsen enorm wichtig ist. Insbesondere werden hierdurch optimale Fräsergebnisse erreicht.

Als vorteilhaft hat es sich hierbei erwiesen, wenn das Bedienelement an einem flexiblen Arm angeordnet ist, der am Vorrichtungsfuß angeschlossen ist. Dann kann das Bedienelement in jede erforderliche Position, also links, rechts, oben, unten, vorne oder hinten gebracht werden und ist auch gleichermaßen von Links- oder Rechtshändern bedienbar. Dadurch hat der Zahntechniker volle Bewegungsund Bedienfreiheit bei der Verwendung dieser Fräsvorrichtung.

Des weiteren ist es günstig, wenn am Fräskopf ein Lichtaufsatz angeordnet ist, der die Frässpindel konzentrisch umschließt und an seiner dem Fräser zugewandten Stirnseite mit mehreren Leuchtelementen versehen ist. Dadurch wird eine optimale Ausleuchtung des Arbeitsfeldes ohne Schattenbildung erreicht. Außerdem stört oder behindert der Lichtaufsatz so nicht die Arbeit.

Zweckmäßigerweise sind die Leuchtelemente gleichmäßig über den Umfang verteilt angeordnet und von LED's gebildet, wodurch keine Erwärmung auftritt.

Um störende Kabelverbindungen zu vermeiden, erfolgt die Stromversorgung des Lichtaufsatzes mittels einer integrierten Steckverbindung über den Fräskopf.

Im folgenden wird die Erfindung an einem in der Zeichnung dargestellten Ausführungsbeispiel näher erläutert; es zeigen:

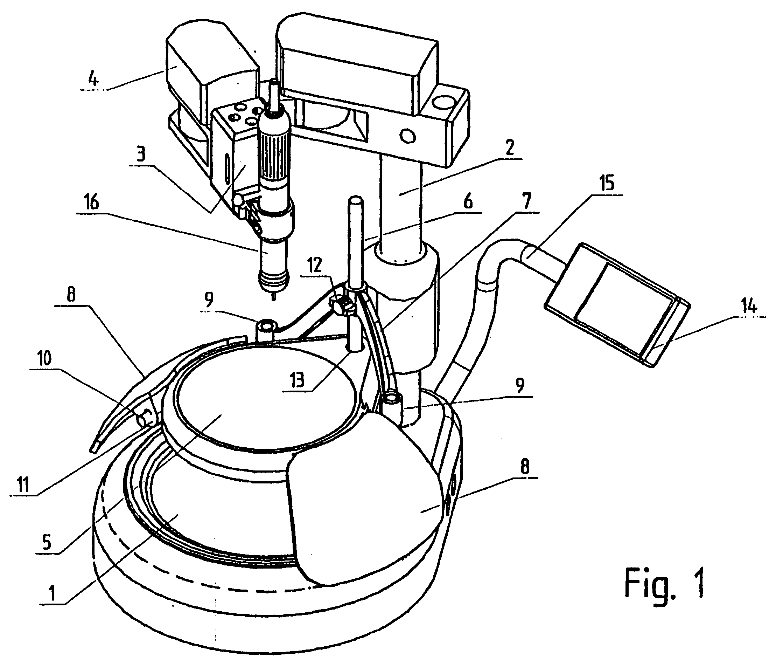

- Fig. 1: die Fräsvorrichtung in perspektivischer Darstellung,

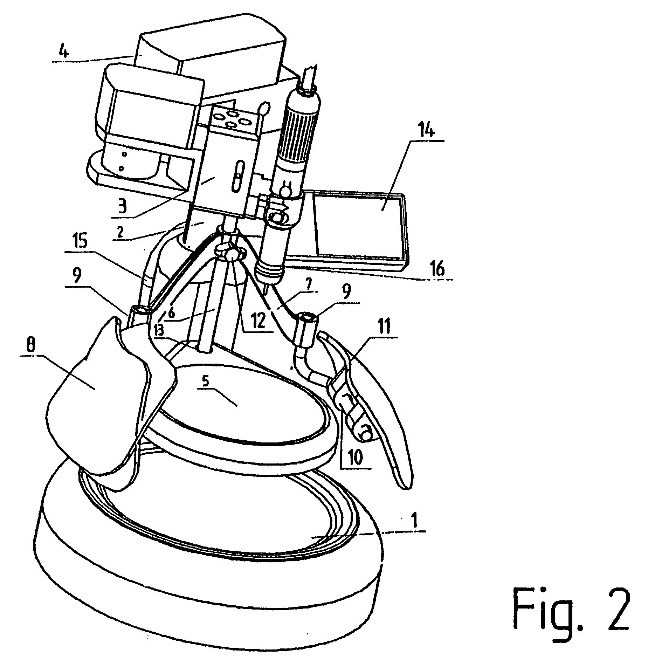

- Fig. 2: den Gegenstand nach Fig. 1 in geänderter Ansicht,

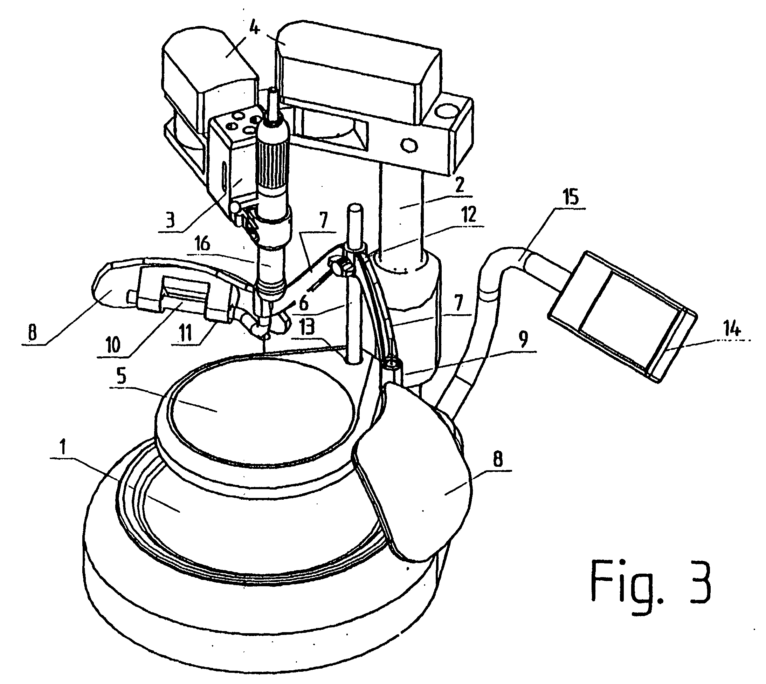

- Fig. 3: eine weitere Ansicht des Gegenstands nach Fig. 1,
- Fig. 4: eine Detailansicht des Lichtaufsatzes.

Die in der Zeichnung dargestellte Fräsvorrichtung ist insbesondere für Anwendungen im Dental-Bereich vorgesehen und besteht aus einem Vorrichtungsfuß 1 mit einer Werkzeugsäule 2, ferner aus einem Fräskopf 3, der über einen Auslegerarm 4 an der Werkzeugsäule 2 angeschlossen ist, sowie aus einem als Auflage für das Werkstück dienenden Frästeller 5.

Um bei unterschiedlicher Höhe der zu bearbeitenden Modelle eine einfache Handhabung zu erlauben, ist der Fräskopf 3 in fester Höhe an der Werkzeugsäule 2 angeschlossen. Dadurch bleibt die Bearbeitungshöhe stets gleich. Dafür ist der Frästeller 5 höhenverstellbar an der Werkzeugsäule 2 angeordnet.

Am Vorrichtungsfuß 1 ist eine Haltesäule 6 vorgesehen, die achsparallel zur Werkzeugsäule 2 verläuft und zwei Auslegerarme 7 mit jeweils einer Arm-/ Handauflage 8 trägt. Dabei ist jede Arm-/ Handauflage 8 über ein Gelenk 9 mit senkrechter Gelenkachse an dem Auslegerarm 7 gelagert. Das Gelenk 9 ist in nicht näher dargestellter Weise mit mehreren Raststellungen versehen. Ferner ist jede der beiden Arm-/Handauflagen 8 auf einer horizontalen Gelenkwelle 10 angeordnet, deren eines Ende an dem Gelenk 9 angeschlossen ist. Dadurch ist es möglich, eine dreidimensionale Verstellung der Arm-/Handauflagen 8 vorzunehmen und somit eine Anpassung an jede Art der Bearbeitung zu erreichen.

Zur Fixierung in der gewünschten Stellung ist die Arm-/Handauflage 8 mittels einer Feststellschraube 11 drehfest auf der Gelenkwelle 10 arretierbar. Zudem sind die beiden Auslegerarme 7 höhenverstellbar und/oder drehbar auf der Haltesäule 6 angeordnet und durch eine weitere Arretierschraube 12 feststellbar.

Die Haltesäule 6 selbst erstreckt sich durch eine Bohrung 13 im Frästeller 5, so daß dessen Höhenverstellung unbeeinträchtigt möglich ist.

Um während des Fräsvorganges die Bedienfunktionen ausführen zu können, ohne daß die gewählte Blickrichtung geändert werden muß, was beim handgeführten Fräsen enorm wichtig ist, ist ein Bedienelement 14 zur Steuerung der wichtigsten Funktionen während des Fräsvorganges vorgesehen. Das Bedienelement 14 ist dabei in seiner Position frei verstellbar.

Das Bedienelement 14 ist an einem flexiblen Arm 15, insbesondere einem Schwanenhals angeordnet, der am Vorrichtungsfuß 1 angeschlossen ist. Dadurch kann das Bedienelement 14 in jede erforderliche Position, also links, rechts, oben, unten, vorne oder hinten gebracht werden und ist auch gleichermaßen von Links- oder Rechtshändern bedienbar. Der Zahntechniker hat somit volle Bewegungs- und Bedienfreiheit bei der Verwendung dieser Fräsvorrichtung.

Schließlich ist am Fräskopf 3 ein Lichtaufsatz 16 angeordnet, der die Frässpindel konzentrisch umschließt und an seiner dem Fräser zugewandten Stirnseite mit mehreren Leuchtelementen 17 versehen ist. Dadurch wird eine optimale Ausleuchtung des Arbeitsfeldes ohne Schattenbildung erreicht. Außerdem stört oder behindert der Lichtaufsatz 16 so die Arbeit nicht.

Die Leuchtelemente 17 sind gleichmäßig über den Umfang verteilt angeordnet und von LED's gebildet, wodurch keine Erwärmung auftritt.

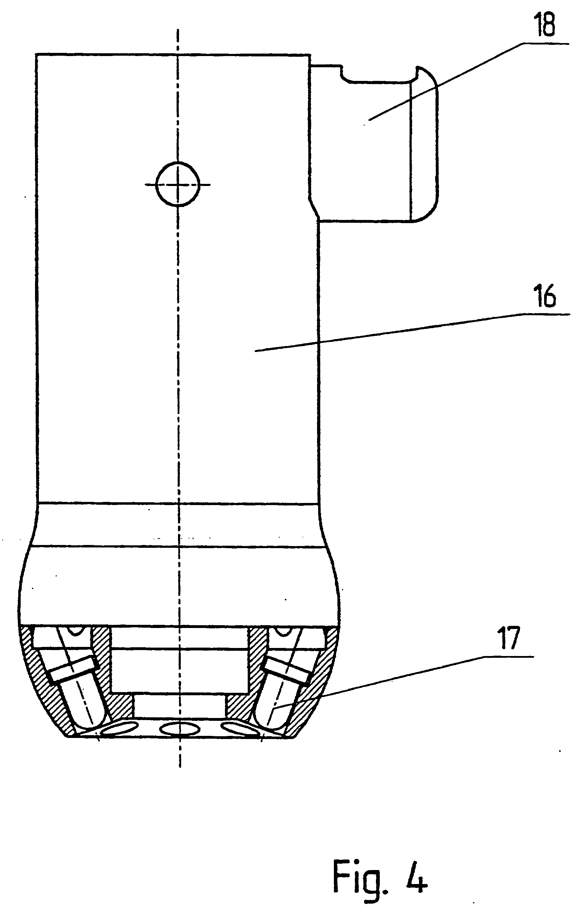

Die Stromversorgung des Lichtaufsatzes 16 erfolgt mittels einer integrierten Steckverbindung 18 über den Fräskopf 3, wie dies in Fig. 4 angedeutet ist, wodurch störende Kabelverbindungen vermieden werden.

## Patentansprüche

1. Fräsvorrichtung, insbesondere für Anwendungen im Dental-Bereich, bestehend aus einem Vorrichtungsfuß (1) mit einer Werkzeugsäule (2), ferner aus einem Fräskopf (3), der über einen Auslegerarm (4) an der Werkzeugsäule (2) angeschlossen ist, sowie einem als Auflage für das Werkstück dienenden Frästeller (5), wobei der Fräskopf (3) in fester Höhe an der Werkzeugsäule (2) angeschlossen und der Frästeller (5) höhenverstellbar an der Werkzeugsäule (2) angeordnet ist, **dadurch gekennzeichnet, daß** am Vorrichtungsfuß (1) eine Haltesäule (6) vorgesehen ist, die achsparallel zur Werkzeugsäule (2) verläuft und wenigstens einen Auslegerarm (7) mit einer Arm-/ Handauflage (8) trägt.

2. Fräsvorrichtung nach Anspruch 1, **dadurch gekennzeichnet, daß** jede Arm-/ Handauflage (8) über ein Gelenk (9) mit senkrechter Gelenkachse an dem Auslegerarm (7) gelagert ist.

3. Fräsvorrichtung nach Anspruch 2, **dadurch gekennzeichnet, daß** das Gelenk (9) mit mehreren Raststellungen versehen ist.

4. Fräsvorrichtung nach Anspruch 2 oder 3, **dadurch gekennzeichnet, daß** jede Arm-/Handauflage (8) auf einer horizontalen Gelenkwelle (10) angeordnet ist, deren eines Ende an dem Gelenk (9) angeschlossen ist.

5. Fräsvorrichtung nach Anspruch 4, **dadurch gekennzeichnet, daß** die Arm-/ Handauflage (8) mittels einer Feststellschraube (11) drehfest auf der Gelenkwelle (10) arretierbar ist.

6. Fräsvorrichtung nach einem der Ansprüche 1 bis 5, **dadurch gekennzeichnet, daß** der Auslegerarm (7) bzw. die Auslegerarme höhenverstellbar und/oder drehbar auf der Haltesäule (6) angeordnet und durch eine Arretierschraube (12) feststellbar ist.

7. Fräsvorrichtung nach einem der Ansprüche 1 bis 3, **dadurch gekennzeichnet, daß** die Haltesäule (6) sich durch eine Bohrung (13) im Frästeller (5) erstreckt.

8. Fräsvorrichtung nach einem der Ansprüche 1 bis 7, **dadurch gekennzeichnet, daß** ein Bedienelement (14) zur Steuerung der wichtigsten Funktionen während des Fräsvorganges vorgesehen ist, wobei das Bedienelement (14) in seiner Position frei verstellbar ist.

9. Fräsvorrichtung nach Anspruch 8, **dadurch gekennzeichnet, daß** das Bedienelement (14) an einem flexiblen Arm (15) angeordnet ist, der am Vorrichtungsfuß (1) angeschlossen ist.

10. Fräsvorrichtung nach einem der Ansprüche 1 bis 9, **dadurch gekennzeichnet, daß** am Fräskopf (3) ein Lichtaufsatz (16) angeordnet ist, der die Frässpindel konzentrisch umschließt und an seiner dem Fräser zugewandten Stirnseite mit mehreren Leuchtelementen (17) versehen ist.

11. Fräsvorrichtung nach Anspruch 10, **dadurch gekennzeichnet, daß** die Leuchtelemente (17) gleichmäßig über den Umfang verteilt angeordnet und von LED's gebildet sind.

12. Fräsvorrichtung nach Anspruch 10 oder 11, **dadurch gekennzeichnet, daß** die Stromversorgung des Lichtaufsatzes (16) mittels einer integrierten Steckverbindung (18) über den Fräskopf erfolgt.

## Claims

1. A milling apparatus, in particular for uses in the dental sector, comprising an apparatus base (1) with a tool pillar (2), and further comprising a milling head (3) which is connected to the tool pillar (2) by way of a cantilever arm (4), and a milling plate (5) serving as a support for the workpiece, wherein the milling head (3) is connected to the tool pillar (2) at a fixed height and the milling plate (5) is arranged adjustably in respect of height on the tool pillar (2), **characterised in that** provided on the apparatus base (1) is a holding pillar (6) which extends in axis-parallel relationship with the tool pillar (2) and carries at least one cantilever arm (7) with an arm/hand rest (8).

2. A milling apparatus according to claim 1 **characterised in that** each arm/hand rest (8) is mounted to the cantilever arm (7) by way of a pivot (9) with a perpendicular pivot axis.

3. A milling apparatus according to claim 2 **characterised in that** the pivot (2) is provided with a plurality of detent positions.

4. A milling apparatus according to claim 2 or claim 3 **characterised in that** each arm/hand rest (8) is arranged on a horizontal pivot shaft (10) of which one end is connected to the pivot (9).

5. A milling apparatus according to claim 4 **characterised in that** the arm/hand rest (8) can be non-rotatably arrested on the pivot shaft (10) by means of a fixing screw (11).

6. A milling apparatus according to one of claims 1 to 5 **characterised in that** the cantilever arm (7) or the cantilever arms is or are arranged adjustably in respect of height and/or rotatably on the holding pillar (6) and can be fixed by an arresting screw (12).

7. A milling apparatus according to one of claims 1 to 3 **characterised in that** the holding pillar (6) extends through a bore (13) in the milling plate (5).

8. A milling apparatus according to one of claims 1 to 7 **characterised in that** there is provided an operating element (14) for controlling the most important functions during the milling operation, wherein the operating element (14) can be freely adjusted in respect of its position.

9. A milling apparatus according to claim 8 **characterised in that** the operating element (14) is arranged on a flexible arm (15) connected to the apparatus base (1).

10. A milling apparatus according to one of claims 1 to 9 **characterised in that** arranged on the milling head (3) is a light attachment (16) which concentrically surrounds the milling spindle and which is provided at its end towards the milling tool with a plurality of lighting elements (17).

11. A milling apparatus according to claim 10 **characterised in that** the lighting elements (17) are arranged distributed uniformly over the periphery and are formed by LEDs.

12. A milling apparatus according to claim 10 or claim 11 **characterised in that** the power supply for the light attachment (16) is afforded by means of an integrated plug connection (18) by way of the milling head.

## Revendications

1. Dispositif de fraisage, en particulier pour des applications dans le domaine dentaire, comprenant un pied de dispositif (1) avec une colonne d'outil (2), une tête de fraisage (3) qui est liée à la colonne d'outil (2) par l'intermédiaire d'un bras (4), ainsi qu'un plateau de fraisage (5) servant de support pour la pièce, la tête de fraisage (3) étant liée à hauteur fixe à la colonne d'outil (2) et le plateau de fraisage (5) étant monté réglable en hauteur sur la colonne d'outil (2), **caractérisé en ce qu'**il est prévu sur le pied de dispositif (1) une colonne de soutien (6), dont l'axe est parallèle à l'axe de la colonne d'outil (2) et qui porte au moins un bras de soutien (7) avec un appui de bras/main (8).

2. Dispositif de fraisage selon la revendication 1, **caractérisé en ce que** chaque appui de bras/main (8) est monté sur le bras (7) par l'intermédiaire d'une articulation (9) avec un axe d'articulation vertical.

3. Dispositif de fraisage selon la revendication 2, **caractérisé en ce que** l'articulation (9) présente plusieurs positions d'encliquetage.

4. Dispositif de fraisage selon la revendication 2 ou 3, **caractérisé en ce que** chaque appui de bras/main (8) est disposé sur un arbre articulé (10) dont l'une des extrémités est reliée à l'articulation (9).

5. Dispositif de fraisage selon la revendication 4, **caractérisé en ce que** l'appui de bras/main(8) peut être bloqué en rotation sur l'arbre articulé (10) au moyen d'une vis de blocage (11).

6. Dispositif de fraisage selon une des revendications 1 à 5, **caractérisé en ce que** le bras (7) ou les bras sont montés réglables en hauteur et/ou tournants sur la colonne de soutien (6) et peuvent être immobilisés au moyen d'une vis de blocage (12).

7. Dispositif de fraisage selon une des revendications 1 à 3, **caractérisé en ce que** la colonne de soutien (6) s'étend à travers un perçage (13) dans le plateau de fraisage (5).

8. Dispositif de fraisage selon une des revendications 1 à 7, **caractérisé en ce qu'**il est prévu un élément de commande (14) pour commander les principales fonctions pendant l'opération de fraisage, la position de l'élément de commande (14) pouvant être réglée librement.

9. Dispositif de fraisage selon la revendication 8, **caractérisé en ce que** l'élément de commande (14) est monté sur un bras flexible (15) qui est relié au pied (1) du dispositif.

10. Dispositif de fraisage selon une des revendications 1 à 9, **caractérisé en ce que** sur la tête de fraisage (3) est disposé un moyen d'éclairage (16) qui entoure de manière concentrique la broche de fraiseuse et est pourvu de plusieurs éléments d'éclairage (17) à son extrémité tournée vers la fraise.

11. Dispositif de fraisage selon la revendication 10, **caractérisé en ce que** les éléments d'éclairage (17) sont répartis régulièrement sur le pourtour et sont formés de diodes électroluminescentes.

12. Dispositif de fraisage selon la revendication 10 ou 11, **caractérisé en ce que** l'alimentation en courant électrique du moyen d'éclairage (16) a lieu par l'intermédiaire de la tête de fraisage grâce à une connexion enfichable intégrée.
